# EUROPEAN PATENT APPLICATION

(11) **EP 2 384 626 A1**
(43) Date of publication of application: **09.11.2011**
(21) Application number: 10461513.3
(22) Date of filing: 05.05.2010
(51) Int. Cl.: A21B 3/04, F28B 1/06, F28F 1/40

(54) **Steam condenser for a steam oven with convection heating**

(71) Applicant: RETECH Spólka z o.o., 39-300 Mielec (PL)
(72) Inventor: Ziarko, Krzysztof, 39-300, Mielec (PL); Ziarko, Andrzej, 39-300, Mielec (PL)
(74) Representative: Klar, Miroslaw

(57) **Abstract**

Steam condenser for convection-type steam oven, equipped with suction hood, fan, connector pipes for steam out of the oven and exchanger, is characterized in that the exchanger (4) located on the side of air suction hood (1), along perforated partition wall (2) of negative pressure channel (3), consists of cuboidal housing (41) with horizontal and parallel, beneficially aluminum profile tubes (42), which have radially located internal ribs (43), at the same moment the inlet channel (5), located between the shorter side wall of exchanger (4) and wall of condenser housing (6), passes into chimney channel (7), located between partition (71) and longer side wall of exchanger (4). Chimney channel (8) has the hood on the top.

## Description

Steam condenser for convection-type steam furnace, according to the invention, is designed for water steam condensation, especially in baking steam ovens of convection-type.

There is known from the description of German utility pattern No DE 29708079 device for steam condensation, which includes heat exchanger with the fan, connector pipes and inlet and outlet holes. Flow path of steam taken from the furnace is separated from the path of cooling air, directed to exchanger by the fan. The exchanger includes askew located plates with different systems of horizontal channels and sensors for temperature control units.

There is also known from the Spanish patent description No ES 2310114 device for steam condensation, located on the rear wall of baking ovens, where the steam is being sucked from the oven b y the fan and then directed to the condenser which has the shape of the coil, and then passes to the tank, from which water is removed outside, for example to sewage system.

There is also known from European patent application No EP 1 530 901 A1 apparatus for condensing of substances from exhaust air of a cooking device, where inside of cuboidal housing exchanger is located, with askew condensing plates. At the inlet to exchanger air fans are located, whereas the steam from furnace to exchanger is fed through pipe, and water after condensation is getting out through the outlet pipe.

Steam condenser for convection-type steam furnace according to the invention is equipped with the suction hood, the fan, connector pipes bringing the steam from the furnace as well as exchanger and characterizes by that the exchanger located on the side of suction hood, along the perforated wall of negative pressure channel, is created by cuboidal housing, inside of which profile tubes, beneficially aluminum, are collaterally and horizontally located. Profiles have radially located internal ribs, which have beneficially rectangular cross section and relation of internal rib height "h" to internal diameter "s" of tube profile is between 0,20 and 0,30. Inlet channel, located between the shorter side wall of exchanger and wall of condenser housing, passes into chimney channel, located between the partition and longer side wall of exchanger. Chimney channel has the hood on the top. The side wall of exchanger housing, located on the side of negative pressure channel, has two vertical rows of outlet holes and centrally located service holes. The bottom of exchanger housing has outlet slots, beneficially located between askew ribs. Between channel wall and exchanger wall, above the steam feeding pipe, additional steam connector pipe is located.

The fan sucking air from the negative pressure channel, is fixed to exchanger by fastener.

Steam condenser for convection-type furnace, according to the invention, allows for water steam condensation coming from the furnace without usage of additional cooling mediums and the only cooling medium used is environment air. Condenser design, especially by using appropriate cross sections of tube profiles which increase heat exchange surface, and increase significantly device efficiency.

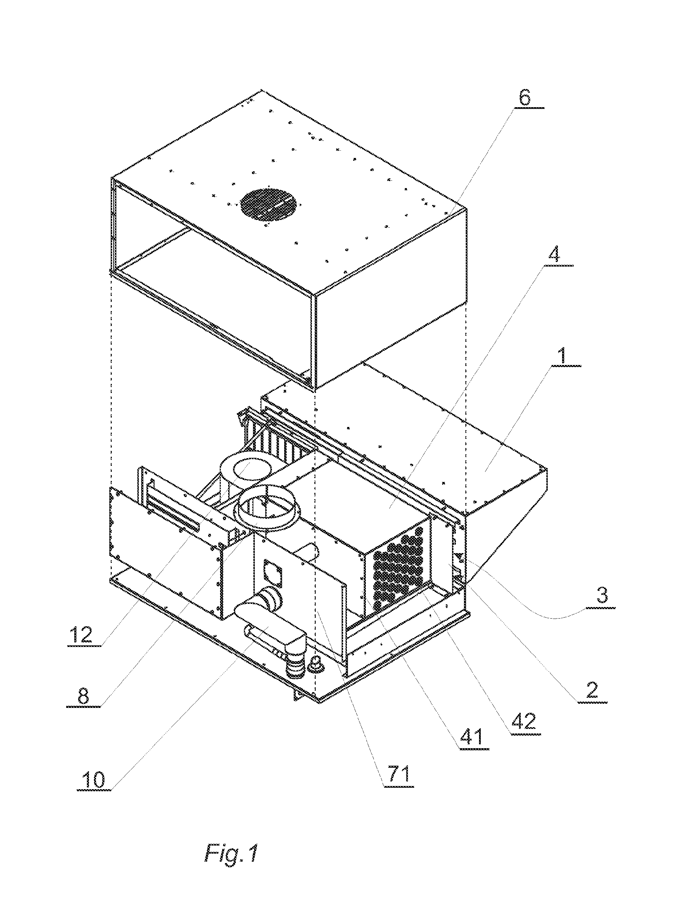

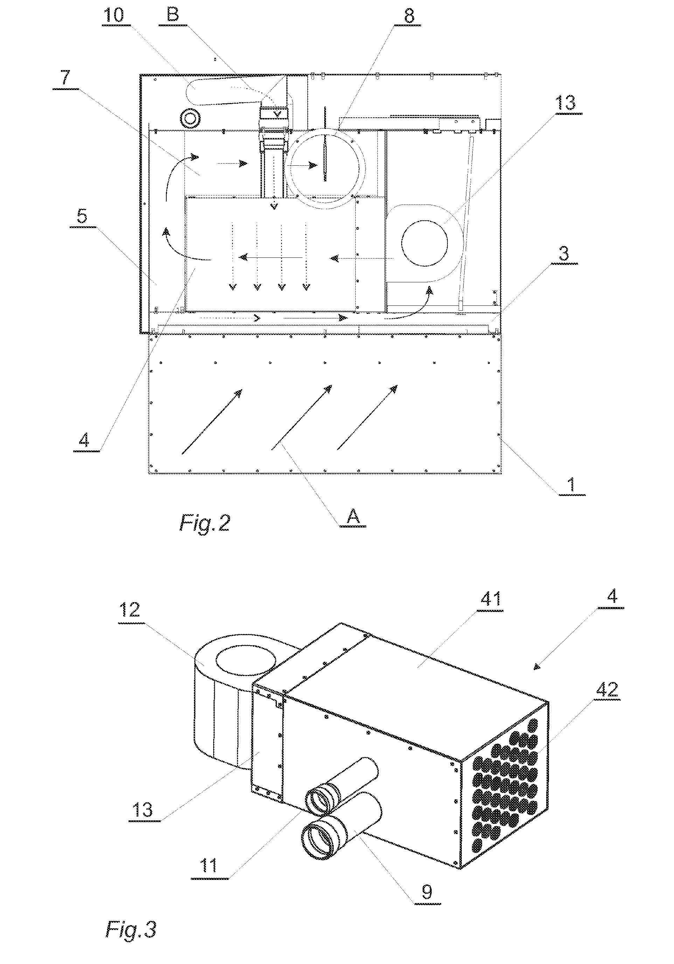

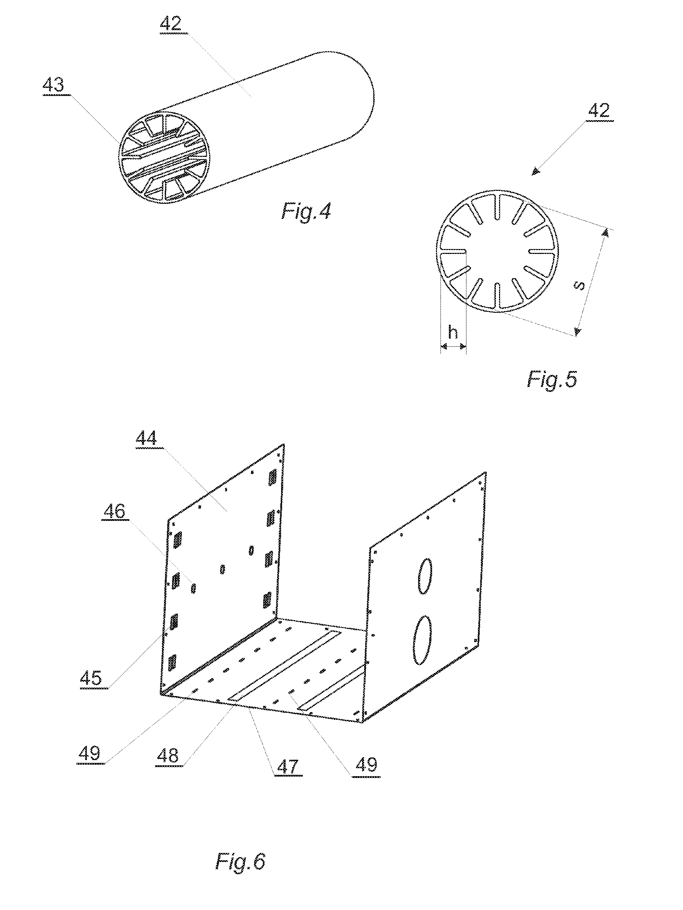

Subject of invention is shown in example of execution on the drawing, where fig. 1 shows the view of condenser with the housing opened, fig. 2 - top view of condenser elements with marked air and steam systems, fig. 3 - three dimensional view of exchanger with the fan, fig. 4 - three dimensional view of the profile, fig. 5 - front view of the profile, fig. 6 - three dimensional view of exchanger housing.

Exchanger 4, located on the side of hood 1 for air suction, along the perforated, dividing wall 2 of negative pressure channel 3, includes cuboidal housing 41, where horizontal and parallel, beneficially aluminum profile tubes 42 are located, having radial, internal ribs 43. Inlet channel 5 is located between shorter side wall of exchanger 4 and housing wall 6 of condenser and passes into located between divider 71 and longer side wall of exchanger 4, chimney channel 7 having the chimney hood 8 on the top.

Radially located internal ribs 43 of profile tube 42 have the rectangular cross section. Relation of height "h" of internal rib 43 to internal diameter "s" of profile tube 42 is between 0,20 and 0,30.

Side wall 44 of housing 41 of exchanger 4, located on the side of negative pressure channel 3, has two vertical rows of outlet holes 45 and centrally located service holes 46.

Bottom 47 of housing 41 of exchanger 4 has exhaust slots 49, beneficially located in rows , located between askew ribs 48.

Additional feeding connector pipe 11 is located between partition 71 of chimney channel and wall of exchanger 4, above the connector pipe 9 for steam with steam feeding pipe 10.

The fan 12 is fixed to exchanger 4 by fastener 13.

Hot water steam B coming out from the furnace is brought through connector pipe 9 and / or additional connector 11 to internal space of exchanger 4. At the same moment external air A is being sucked through the hood 1 into negative pressure channel 3, where the cooled steam B is being mixed with the air A and after that pumped by the fan into profile tubes 42. Hot water steam B inside of exchanger 4 is condensing on external surfaces of profiles 42 and being removed through slots 49, located in the bottom 47 of housing 41 of exchanger 4. Air A after passing the exchanger is directed through inlet channel 5 to chimney channel 7 and is removed out of the condenser.

## Claims

1. Steam condenser for convection-type steam furnace, equipped with the suction hood, the fan, connector pipes feeding the steam from the furnace and exchanger **characterized in that** the exchanger 4, located on the air suction hood (1) side, along the perforated dividing wall (2) of negative pressure channel (3), has cuboidal housing (41), with horizontal and parallel, beneficially aluminum profile tubes (42), which have radial internal ribs (43), at the same moment inlet channel (5) located between the shorter side wall of exchanger (4) and wall of condenser housing (6) passes into located between partition (71) and longer side wall of exchanger (4), chimney channel (7) which has the chimney hood on the top.

2. Steam condenser for convection-type steam furnace, according to claim 1, **characterized in that** the radially located internal ribs (43) of profile tube (42) have rectangular cross-section.

3. Steam condenser for convection-type steam furnace, according to claim 1, **characterized in that** the relation of height (h) of internal rib (43) to internal diameter (s) of profile tube (42) is between 0,20 and 0,30.

4. Steam condenser for convection-type steam furnace, according to claim 1, **characterized in that** the side wall (44) of housing (41) of exchanger (4), located on the side of negative pressure channel (3), has two vertical rows of outlet holes (45) and centrally located service holes (46).

5. Steam condenser for convection-type steam furnace, according to claim 1, **characterized in that** the bottom (47) of housing (41) of exchanger (4), has outlet slots (49), located beneficially in rows, between askew ribs (48).

6. Steam condenser for convection-type steam furnace, according to claim 1, **characterized in that** between partition (71) of chimney channel and wall of exchanger (4), above connector pipe for steam (9) with steam feeding pipe (10), additional connector pipe (11) is located.

7. Steam condenser for convection-type steam furnace, according to claim 1, **characterized in that** the fan (12) is fixed to exchanger (4) by fastener (13).
